Europäisches Patentamt

European Patent Office

Office européen des brevets

(19)

(11) EP 1 376 115 A2

(12) EUROPEAN PATENT APPLICATION

(43) Date of publication:
02.01.2004 Bulletin 2004/01

(51) Int Cl.⁷: **G01N 27/403**, G01N 33/487

(21) Application number: 03253940.5

(22) Date of filing: 23.06.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **21.06.2002 CN 91113636**

(71) Applicant: **Apex Biotechnology Corporation Hsinchu, ROC (TW)**

(72) Inventors:
• **Yang, Mark, 3F, No. 86, Alley 27, Lane 372 Taipei 105, Taiwan (CN)**
• **Huang, River, 4F, No. 6, Innovation Road II Hsinchu, Tawain (CN)**

• **Huang, Bin, 4F, No. 6, Innovation Road II Hsinchu, Tawain (CN)**
• **Chu, Shame, 4F, No. 6, Innovation Road II Hsinchu, Tawain (CN)**
• **Lin, Yueh-Hui, 4F, No. 6, Innovation Road II Hsinchu, Tawain (CN)**
• **Shen, Benjamin Cheng-Yu, 4F No.6, Innovation Rd II Hsinchu, Tawain (CN)**
• **Shen, Thomas Y.S., 4F, No. 6, Innovation Road II Hsinchu, Tawain (CN)**

(74) Representative: **Senior, Alan Murray J.A. KEMP & CO., 14 South Square, Gray's Inn London WC1R 5JJ (GB)**

(54) **Portable multi-functional electrochemical sensor**

(57)     A portable multi-functional electrochemical biosensor system comprises a plurality of sample cells, pluggable information memories and a multi-functional signal analysis processor. The biosensor system uses a set of sample cell and pluggable information memory to detect the concentration of a corresponding selected analyte. Each sample cell has a reaction zone on which a chemical substance is placed to react with the corresponding analyte and has at least two independent electrodes. During detection, each corresponding pluggable information memory can provide parameters used for analysis. The multi-functional signal analysis processor has a microprocessor, an electrically erasable programmable read/write memory and an environmental temperature sensor. The concentration of the selected analyte is calculated by using the electrochemical reaction signal output from the sample cell and the parameters with cooperation of the environmental temperature sensor, and then an analysis result is output.

Fig. 2

EP 1 376 115 A2

## Description

The present invention relates to a portable multi-functional biosensor system, and more particularly to a portable multi-functional biosensor system that is able to detect the concentration of various selected analytes. The portable multi-functional biosensor system of the present invention can utilize a set of sample cell and pluggable information memory each time to detect the concentration of a corresponding selected analyte, and to calculate the concentration of the corresponding selected analyte by using a multi-functional signal analysis processor, and output the detected result. Moreover, with the cooperation of a status detector, whether or not the status of the portable multi-functional biosensor system normally operates is detected.

Portable multi-functional biosensor system are used at specific detection sites that are difficult to reach for large precise detection equipment and operators, for example, remote fields for the purpose of researches, homes and specific places for self medicine care (such as blood sugar, cholesterol, hemoglobin and uric acid) measurements. The portable multi-functional biosensor system are generally classified into optical and electrochemical biosensor systems. Since optical detection is adopted by most large precise detection equipments, a portable optical biosensor system, such as an early developed blood sugar detector, is more widely used. However, the optical biosensor system must be equipped with a light source and a light detector, and thus cannot be further shrunk for easier portability, and the optical biosensor system easily becomes unstable in function due to aging. Furthermore, the optical biosensor system is easily interfered by an external light source, causing undesired inaccuracy. An electrochemical biosensor system can improve this shortcoming. In addition, an electrochemical sample cell is cheaper in manufacture cost than an optical sample cell. Therefore, the portable optical biosensor system is gradually replaced by the portable electrochemical biosensor system.

The portable electrochemical biosensor system has more advantages, but still has several disadvantages that need to be eliminated. Significantly, electrochemical signals sent from electrodes are different due to the different properties of the sample cells. The inaccuracy are caused by the preparations of each batch of agents or the activities of enzymes on the sample cell. As a result, after each batch of sample cells is manufactured, they may not generate the same electrochemical signal for the same concentration detection. Therefore, parameters for detection and calculation calibration for each batch of sample cells must be inputted from outside so that the same type of sample cells can be used in the same electrochemical biodetectror so as to reduce inaccuracy therebetween. Inputting the parameter from outside to control the electrochemical biosensor system which operates with an existing program and a processor and then outputs a result, is similar to inputting data stored on a computer diskette. For applications in minimization, it is similar to a palm card-inserted game machine. US Patent No. 4,975,647 relates to a bioanalyzer which is controlled by parameters input from the outside, and it is stated that a set of detectors cooperating with a blood analyzer builds parameters for defining calibration timing , volume and concentration of fluids in an externally inserted memory card having a parameter check-sum code, thereby attaining precise detection. US Patent No. 5,366,609 shows an example of a portable electrochemical biosensor system which is controlled by parameters input from the outside, and is characterized in that:

(1) a predetermined Cottrell current equation (also mentioned in US Patent No. 5,366,609 and US Patent No. 5,243,516) is used as follows:

$$\text{Cottrell Current} = i = \frac{nF\sqrt{D}CA}{\sqrt{\pi}\ \sqrt{t}}$$

n: number of transferred electrons
F: Faraday's constant
A: areas of measuring electrodes
C: concentration of the analyte
D: diffusion coefficient of electroactive species
t: time

The Cottrell current can be transformed and shown by the following equation:

$$i_t = K\frac{C}{\sqrt{t}}$$

After continuously detecting an electrochemical analog signal for an analyte (glucose) and accumulating related data in a period of time, a processor converts the analog signal representing the concentration of the analyte (glucose) into a digital signal, and then outputs the digital signal;

(2) during detection, whether or not the externally inserted memory card which stores measurement-related parameters exists or is exchanged is repeatedly checked several times by using a processor connected to the externally inserted memory card, thereby preventing wrong parameters from being input. The above equations and safe check need more complex and precise software and hardware to operate. Consequently, the cost for achieving this object must not be greatly reduced.

In the current markets, portable electrochemical biosensor system, such as Boehringer Mannheim, Roche, MediSense and Matsushita's blood sugar detector and blood sugar concentration detecting strip, still have only one function for detection. Those manufacturers have not produced or marketed a multi-functional portable electrochemical biosensor system yet. By using various sample cells made by agents or enzymes for detecting concentrations, such as blood sugar concentration biosensor system (ROC Patent Nos. 1094661 and 124332I), uric acid concentration biosensor system (ROC Patent No. 107073I and US Patent No. 6,258,230 B1) hemoglobin concentration biosensor system (ROC Patent Publication No. 466344 and US Patent Application No. 09/771,634) in cooperation with corresponding parameters input from outside for the uses of detection and calculation calibrations, the present invention not only can simplify the designs of software and hardware, but also can precisely detect the concentration of a selected analyte. Moreover, the detection for the concentrations of various specific analytes can be achieved by a portable detector so as to reduce cost. With such an arrangement, a portable multi-functional electrochemical biosensor system is constructed.

After integration, an operator must be able to confirm frequently whether or not the status of the portable multi-functional electrochemical biosensor system is normal in operation. To meet this requirement, the present invention designs a fixed resistor status detector for simply detecting the status of the portable multi-functional electrochemical biosensor system so as to increase the accuracy thereof.

An object of the present invention is to integrate various detecting devices for detecting the concentrations of various analytes using an electrochemical principle to form a multi-functional biosensor system. In the multi-functional biosensor system of the present invention, a plurality of pluggable information memories corresponding to various sample cells are used to store parameter information required by the sample cells when detecting concentration for function switching. The pluggable information memories and the sample cells are integrated with a multi-functional signal analysis processor to construct a multi-functional electrochemical biosensor system which is light and portable for easy operations.

With a microprocessor and an electrically erasable programmable read/write memory in the multi-functional signal analysis processor, the parameters stored in each pluggable information memory are able to be transferred into the electrically erasable programmable read/write memory, so that the microprocessor only uses internal information for performing detection. The parameters stored in the electrically erasable programmable read/write memory are not updated until the parameters stored in another pluggable information memory are transferred. Moreover, the microprocessor uses a parameter check-sum code to identify whether or not the input parameters are correct, thereby ensuring that the parameter information is not lost.

An electrode of the sample cell is grounded to serve as a reference electrode, and the other electrode of the sample cell provided with a reference potential and having a signal to be amplified via an amplifier and a feed-back resistor serves as an working electrode. During detection, an electrochemical reaction signal output from the working electrode is sent to the multi-functional signal analysis processor for calculating the concentration of a selected analyte.

The multi-functional signal analysis processor comprises a gain adjustable amplifier. The inverting input terminal of the gain adjustable amplifier is connected to the working electrode which is applied with a specific potential. Once the selected analyte is reacted with a reactant in a time, the specific potential supply is terminated. After a detection waiting time designated by the multi-functional information memory lapses, a constant potential is further applied to the working electrode to establish an electrochemical reaction environment. At this time, the electrochemical reaction signal is output from the working electrode, and detected with the parameters stored in the multi-functional information memory. The signal detected from the working electrode is reasonably amplified, and the concentration of the selected analyte is calculated by using the calculation parameters designated in the information memory, and then the detected resultant is output.

Another object of the present invention is to provide a status detector in the portable electrochemical biosensor system to simply detect whether or not the status of the portable electrochemical biosensor system is normal in operation. This facilitates users to frequently detect the status of the biosensor system so as to increase the accuracy of the portable electrochemical biosensor system.

The invention will be further described by way of example with reference to the accompanying drawings, in which:-

Fig. 1 is a graph showing the relationship between an electrochemical signal and a uric acid concentration for a conventional uric acid detector.

Fig. 2 is a schematic, perspective view showing a multi-functional electrochemical biosensor system according to the present invention.

Fig. 3 is a schematic view showing a structure of a pluggable memory card.

Fig. 4 is a schematic view showing structures of a concentration detector and a status detector, wherein the concentration detector includes a detected zone and electrodes, and the status detector includes a PCB having two electrodes and a resistor thereon.

Fig. 5 is a block circuit diagram showing a multi-functional signal analysis processor according to the present invention.

Fig. 6 is a circuit diagram showing a signal amplifying unit according to the present invention.

Fig. 7 is a circuit diagram showing an alternative signal amplifying unit according to the present invention.

Figs. 8a and 8b are a flow chart of executing a program according to the present invention.

Fig. 9 is a graph showing blood sugar concentrations detected according to the present invention.

Fig. 10 is a graph showing uric acid concentrations detected according to the present invention.

Fig. 11 is a graph showing hemoglobin concentrations detected according to the present invention.

Fig. 12 is a graph showing cholesterol concentrations detected according to the present invention.

Fig. 13 is a graph showing lactic acid concentrations detected according to the present invention.

**REFERENCE NUMERALS OF MAJOR ELEMENTS**

| | |
|---|---|
| 1 | portable multi-functional biosensor system |
| 2 | Slot |
| 3 | Slot |
| 4 | Button |
| 5 | Display Panel |
| 6 | Pluggable memory card |
| 7 | Sample cell |
| 8 | Detection Zone |
| 9 | Electrode |
| 10 | Electrode |
| 11 | External Cover |
| 12 | External Cover |
| 13 | PCB |
| 14 | Pluggable Information Memory |
| 15 | Chip Capacitor |

| | |
|---|---|
| 16 | Conductive Lines |
| 17 | Status Detector |
| 18-1 | Electrode |
| 18-2 | Electrode |
| 19 | Fixed Resistor |
| 20 | Microprocessor |
| 21 | Electronic Erasable Programmable Read/Write Memory |
| 22 | Power Managing Device |
| 23 | Reference potential Unit |
| 24 | Concentration Detector Inserted Detecting Unit |
| 25 | Signal Amplifying Unit |
| 26 | Access Selecting Unit |
| 27 | Environmental Temperature Sensor |
| 28 | Analog-to-Digital Converter |
| 29 | Reading Unit Selecting Device |
| 30 | Display Device |
| 31 | Memory Reading Device |
| 32 | Bus |
| 33 | Amplifier |
| 34 | Connection Line |
| 35 | Connection Line |
| 36 | Connection Line |
| 37 | Switch |
| 38 | Feed-Back Resistor |
| 39 | Feed-Back Resistor |
| 40 | Connection Line |
| 41 | Connection Line |
| 42 | Connection Line |
| 43 | Connection Line |

| 44 | Amplifier |
|----|-----------|
| 45 | Feed-Back Resistor |
| 46 | Feed-Back Resistor |
| 47 | Feed-Back Resistor |
| 48 | Feed-Back Resistor |
| 49 | Switch |
| 50 | Switch |
| 51 | Switch |
| 52 | Switch |
| 53 | Connection Line |
| 54 | Connection Line |
| 55 | Connection Line |
| 56 | Connection Line |
| 57 | Connection Line |
| 58 | Connection Line |
| 59 | Connection Line |
| 60 | Connection Line |
| 61 | Connection Line |
| 62 | Connection Line |
| 63 | Arrow |
| 64 | Statement Box |
| 65 | Condition Box |
| 66 | Statement Box |
| 67 | Statement Box |
| 68 | Condition Box |
| 69 | Condition Box |
| 70 | Statement Box |
| 71 | Statement Box |
| 72 | Statement Box |

| 73 | Statement Box |
|----|-----------|
| 74 | Arrow |
| S | Sample cell |
| L1 | Conductive Line |
| L2 | Conductive Line |

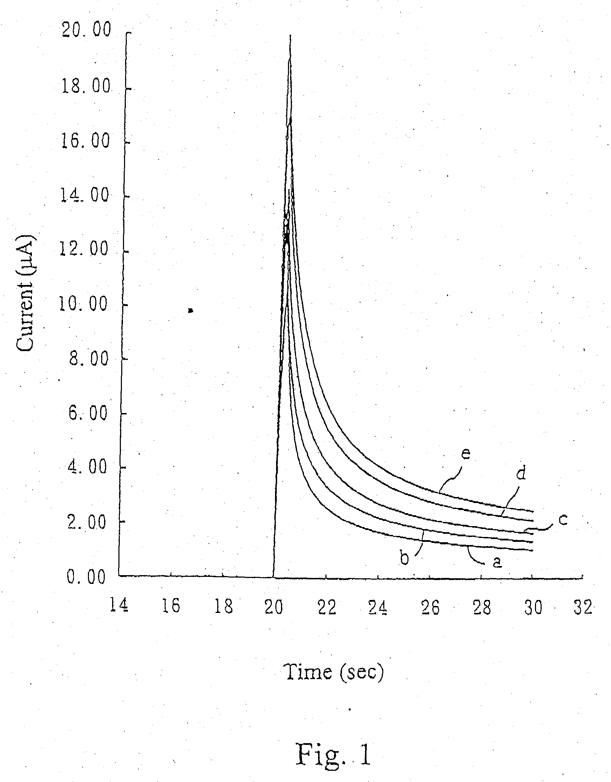

An electrochemical biosensor system having a microprocessor, which is controlled by parameters input from outside, pertains to a prior art. The present invention integrates detecting devices (such as a plurality of sample cells, a plurality of pluggable information memories and a multi-functional signal analysis processor) to form a multi-functional biosensor system, thereby being able to detect the concentrations of various objects using an electrochemical principle. Parameter information required by the plurality of sample cells when detecting concentrations of various selected analytes is stored in a plurality of pluggable information memories which correspond to the plurality of sample cells, respectively. In the present invention, the plurality of sample cells can be, for example, a blood sugar sample cell (see ROC Patent No. 109466I and ROC Patent No. 124332I), a uric acid concentration biosensor system (see ROC Patent No. 1070731 and US Patent No. 6,258,230 B1), or a hemoglobin concentration biosensor system (see ROC Patent Publication No. 466344 and US Patent Application No. 09/771, 634). It is found that the relationship between an electrochemical current value and a waiting detected concentration can be derived by detecting an electrochemical current signal one time (for example, after electricity is supplied for 7 seconds) with a proper electrochemical reaction time (300 mV) by a BAS CV-50W V-A analyzer. For example, Fig. 1 is a graph showing a resultant of a uric acid sample cell by using a V-A analyzer. That is, the relationship between a current and a uric acid concentration can be expressed in a simple equation of two variables. Therefore, when detection and calculation calibration parameters input from the outside are set, the concentration of the selected analyte can be detected with

$$i = KC + d$$

wherein
  i = electrochemical current
  C = concentration of the selected analyte
  k = correction coefficient 1 of the selected analyte
  d = correction coefficient 2 of the selected analyte
The resultant is featured in that (1) the concentration of the selected analyte can be derived without using the Cottrell current equation; and (2) check and calculation can be done without continually detecting and accumulating data (as stated in US Patent Nos.

5,366,609 and 5,243,516). As a result, not only the designs of software and hardware can be simplified, but also the concentration of the selected analyte can be precisely detected. Moreover, the detection for the concentrations of various specific analytes can be performed all by the portable multi-functional electrochemical biosensor system of the present invention. In addition, the multi-functional integration of the present invention results in cost reducing.

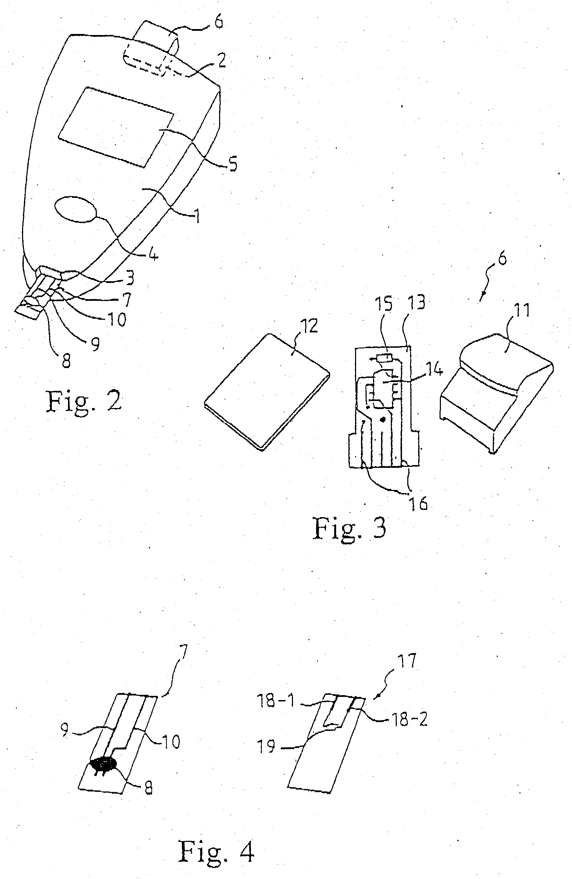

As shown in Figs. 2, 3 and 4, a portable multi-functional electrochemical biosensor system comprises a plurality of sample cells 7, each sample cell 7 having a reaction zone on which a substance is placed to react with a corresponding selected analyte, and having at least two independent electrodes 9 and 10 which are not connected to each other, wherein one of the two electrodes is a reference electrode, and the other is an working electrode, and when a detective reaction occurs, the electrodes output an electrochemical reaction signal; a plurality of pluggable information memories 14, corresponding to the sample cells 7, respectively, during detection, each pluggable information memory 14 included in a pluggable information card 6 and being able to provide parameters used for analyzing the concentration of the corresponding selected analyte; and a multi-functional signal analysis processor 1, including a microprocessor, an electrically erasable programmable read/write memory and an environmental temperature sensor (not shown), the multi-functional signal analysis processor 1 having at least two input terminals which are connected to the sample cell 7 and the pluggable information memory 14, respectively, the microprocessor transferring the parameters from the pluggable information memory 14 to the electrically erasable programmable read/write memory so that the concentration of the selected analyte is calculated by using the electrochemical reaction signal output from the sample cell 7 and the parameters provided by the electrically erasable programmable read/write memory, as well as a temperature compensation established by the environmental temperature sensor, when an electrochemical reaction occurs; and a status detector 17, having two independent electrodes which are connected to a resistor 19 with a constant resistance, and the sample cell which is connected to the multi-functional signal analysis processor 1, and whether the status of the multi-functional signal analysis processor is normal is based on whether the resistance of the resistor detected by the multi-functional signal analysis processor conforms to the built-in resistance of the processor. The biosensor system uses a set of sample cell 7 and pluggable information memory 14 to detect the concentration of a corresponding selected analyte each time, so that the concentrations for various selected analytes can be detected.

When the sample cell 7 is utilized in an enzyme catalysis system, the reactant can comprises (1) enzymes which are able to react with a selected analyte or a series of enzymes required for subsequent reactions; and (2) electronic intermediates having an oxidoreductase activity. However, if the sample cells 7 are utilized in a enzyme-free system, the reactant does not comprise the enzymes shown in item (1). The reactant is fixed on the electrochemical reaction zone of the sample cell by using a carrier formed of hydrophilic polymers. The reaction zone has at least two separate electrodes, one being a reference electrode; and the other being a working electrode. When a reaction occurs and is detected, an electrochemical reaction signal is output from the working electrode under this electrochemical reaction environment. In the present invention, the biosensor system can detect various selected analytes based on the types of the reactants fixed on the sample cell.

Referring further to Fig. 3, the pluggable memory card 6 comprises an pluggable information memory 14 storing detection parameters, such as a start threshold, the type of the selected analyte, detection steps, detection time, a temperature compensation and a method for calculation, which are provided for the use of the multi-functional signal analysis processor to calculate the concentration of a corresponding selected analyte. The pluggable information memory 14 can be a read only memory (ROM), an ultraviolet erasable programmable read only memory (UVEPROM) or an electrically erasable programmable read only memory (EEPROM).

The comparison of the sample cell 7 and the status detector 17 in structure is shown in Fig. 4. The pitch of the electrodes 9 and 10 is equal to that of the electrodes 18-1 and 18-2. The status detector 17 is used to simply detect the status of the multi-functional signal analysis processor 1.

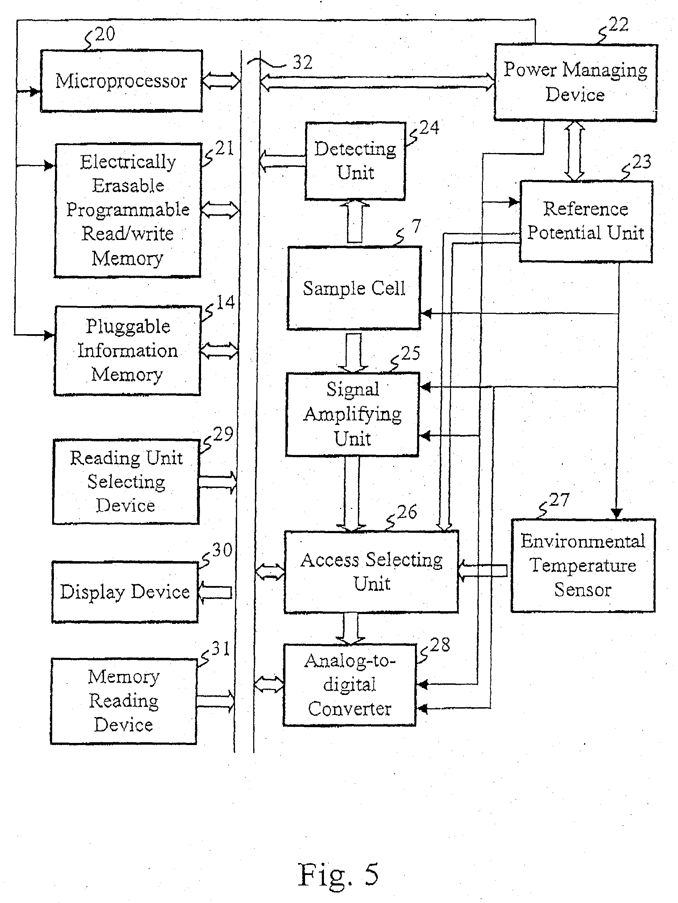

Fig. 5 is a block diagram showing the function of the multi-functional signal analysis processor 1. Data stored in the pluggable information memory 14 can be retrieved by the microprocessor 20 via a bus 32. The retrieved data are stored in the electrically erasable programmable read/write memory 21. A parameter check-sum cod is derived by calculating the data retrieved from the pluggable information memory 14. Whether or not the data of the pluggable information memory 14 is wrong is determined by comparing the derived parameter check-sum code with the parameter check-sum code of the pluggable information memory 14. A detecting unit 24 can check whether or not a sample cell 7 is inserted into a slot 3. The microprocessor 20 receives a signal from the detecting unit 24 via a bus 32 to ensure whether or not the sample cell 7 is inserted into the slot 3. If the received signal is at a low logic level, the multi-functional signal analysis processor 1 is woken up. The microprocessor 20 controls an access selecting unit 26 via the bus 32. The access selecting unit 26 makes a potential level of the reference potential unit 23 be sent to an analog-to-digital converter 28. The microprocessor 20 receives an output reading of the analog-to-digital converter 28 via the bus 32, and determines whether or not the potential level of the reference potential unit 23 is abnormal. The sample cell 7 is able to receive a proper polarized potential level via the reference potential unit 23. The reaction signal of the sample cell 7 is amplified by a signal amplifying unit 25, wherein the gain of the amplifying unit 25 is determined by the access selecting unit 26. The amplified signal is sent to the analog-to-digital converter 28 from the output of the signal amplifying unit via the access selecting unit 26. The microprocessor 20 controls the analog-to-digital converter 28 via the bus 32. After that, the output value of the analog-to-digital converter 28 is obtained and operated. The environmental temperature sensor 27 senses an environmental temperature, and then generates a corresponding value. The corresponding value is sent to the analog-to-digital converter 28 via the access selecting unit 26. The microprocessor 20 controls the analog-to-digital converter 28 via the bus 32. Then, an output value of the analog-to-digital converter 28 is obtained and operated to show whether the current environmental temperature is too high or too low. After the microprocessor 20 receives the data from the electrically erasable programmable read/write memory 21, the microprocessor 20 controls the reference potential unit 23 via the bus 32 to provide a proper potential level to the sample cell 7, the signal amplifying unit 25, the analog-to-digital converter 28 and the environmental temperature sensor 27. A power managing device 22 is used to manage the power sources of the units, such as the microprocessor 20, the electrically erasable programmable read/write memory 21, the pluggable information memory 14, the reference potential unit 23, the signal amplifying unit 25 and the analog-to-digital converter 28. A user is provided with a reading unit selecting device 29 for selecting what unit is used to measure blood. The microprocessor 20 receives a signal from the reading unit selecting device 29 via the bus 32. A display device 30 shows various information and test resultants via the bus 32. The measured values stored in the electrically erasable programmable read/write memory 21 can be displayed by a reading memory device 31.

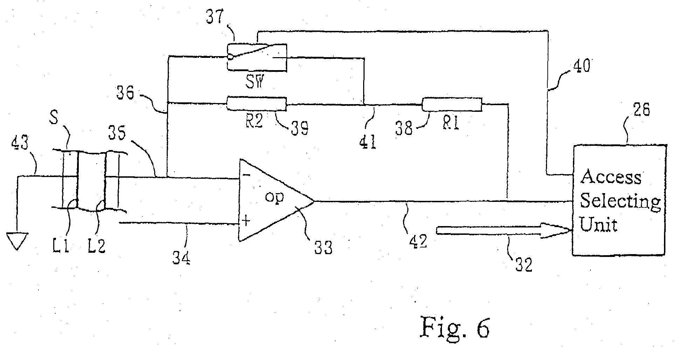

Fig. 6 shows an electrochemical signal amplifying mechanism including an amplifier 33, a switch 37, a feed-back resistor 38, a feed-back resistor 39 and an access selecting unit 26. A detecting device S can be the sample cell 7 or the status detector 17, a conductive line L1 represents the electrode 10 of the sample cell 7 or the electrode 18-2 of the status detector 17, and a conductive line L2 represents the electrode 9 of the sample cell 7 or the electrode 18-1 of the status detector 17. The inverting input terminal of the amplifier 33 is connected to the conductive line L2 of the detecting device S via a conductive line 35. A terminal of the switch 37 and a terminal of the feed-back resistor 39 are connected to the conductive line 35 via a conductive line 36. The other terminal of the switch 37 is connected to the other terminal of the feed-back resistor 39 and a terminal of the feed-back resistor 38 via the a connection line 41. The other terminal of the feed-back resistor 38 is connected to a connection line 42. The control terminal of the switch 37 is connected to the access selecting unit 26 via a connection line 40. The conductive line L1 of the detecting device S is grounded via a connection line 43. The reference potential unit 23 is connected to a connection line 34, and provides a proper potential to the conductive line L2 of the detecting device S. This potential causes a current flowing to the detected zone 8 of the sample cell 7 or the fixed resistor 19 of the status detector via the conductive line L2 of the detecting device S, and then to the conductive line L1 of the detecting device S (ground). The current is amplified by the amplifier 33 and the feed-back resistor 38 or the feed-back resistor 39. The amplified signal is sent to the access selecting unit 26 via the conductive line 42. Before the output signal of the amplifier 33 is measured, a potential level is sent from the access selecting unit 26 to the control terminal of the switch 37 via the connection line 40 to turn on or off the switch 37. When the switch 37 is turned off to have only the feed-back resistor 38 included in the feed-back path, it is set to a blood sugar measuring mode. When the switch 37 is turned on to have the feed-back resistors 38 and 39 included in the feed-back path, it is set to a uric acid measuring mode. The access selecting unit 26 selects various analog signals and allows them to pass through, and then the selected various analog signals are sent to the analog-to-digital converter 28. The microprocessor 20 controls the access selecting unit 26 via the bus 32. When the sample cell 7 or the status detector 17 is inserted into the slot 3, there are various currents generated and flowing to the detected zone 8 or the fixed resistor 19, thereby determining the sample cell 7 or that the status detector is inserted. If the status detector is inserted into the slot 3, the current flowing to the fixed resistor 19 is amplified. This reading is calculated by the microprocessor 20, and then is compared with the standard upper and lower limits stored in the memory. If the status detector is normal, whether or not the multi-functional signal analysis processor 1 is abnormal can be simply determined when the test value goes beyond the scope of the standard upper and lower limits.

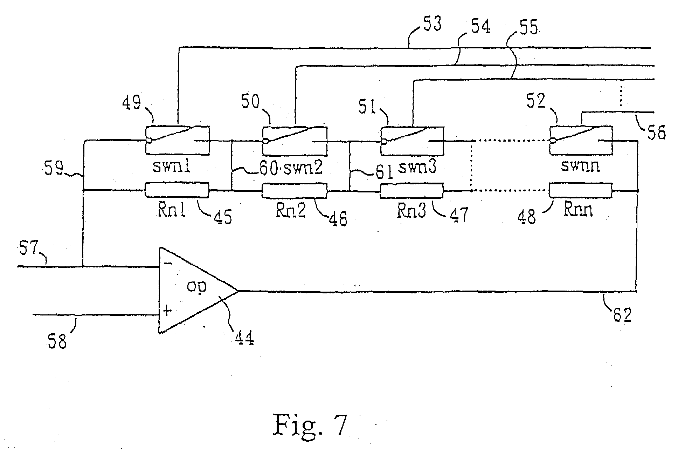

Fig. 7 shows an alternative electrochemical signal amplifying mechanism which is obtained by improving the signal amplifying mechanism of Fig. 6. The alternative electrochemical signal amplifying mechanism can be commonly used by various biosensors and allow signals to be reasonably amplified so as to enhance the resolution of the electrochemical signal when detection is performed. In Fig. 7, a terminal of a connection line 58 is connected to the non-inverting input terminal of an amplifier 44, and the other terminal of which is connected to a reference potential terminal so as to make the potential at the non-inverting input terminal of the amplifier 44 be approximate to that at the non-inverting input terminal of the amplifier 44. A connection line 57 is connected to the inverting input terminal of the amplifier 44 and the polarized terminal of the sensor. The inverting input terminal of the amplifier 44 is connected to a fixed resistor (Rn1) 45 and a switch (swn1) 49 via connection lines 57 and 59. There are several feed-back resistors (Rn1) 45~(Rnn) 48 connected in series between the connection line 59 and a connection line 62. Similarly, there are several switches (swn1) 49~(swnn) 52 connected in series between the connection line 59 and the connection line 62. The output of the amplifier 44 is connected to the fixed resistor (Rnn) 48 and the switch (swnn) 52 via the connection line 62. The joint terminal of the fixed resistor (Rn1) 45 and the fixed resistor (Rn2) 46 is connected to that of the switch (swn1) 49 and the switch (swn2) 50 via a connection line 60, the joint terminal of the fixed resistor (Rn2) 46 and the fixed resistor (Rn3) 47 is connected to that of the switch (swn2) 50 and the switch (swn3) 51 via a connection line 61, and so on. Connection lines 53-56 serve as the control lines of the switches (swn1-swnn) 49-52. Different sensors use different sets of fixed resistors and switches, respectively if swn1 is open. Meanwhile, if swn2-swnn are closed, the resistance between Rn2-Rnn is very small. At this time, only the Rn1 is taken as a feed-back resistor for amplifying. If Rn2 is taken as a feed-back resistor for amplifying, swn2 is open while swn1 and swn3-swnn are closed, and the like. The numbers of Rn1-Rnn and swn1-swnn are selectable.

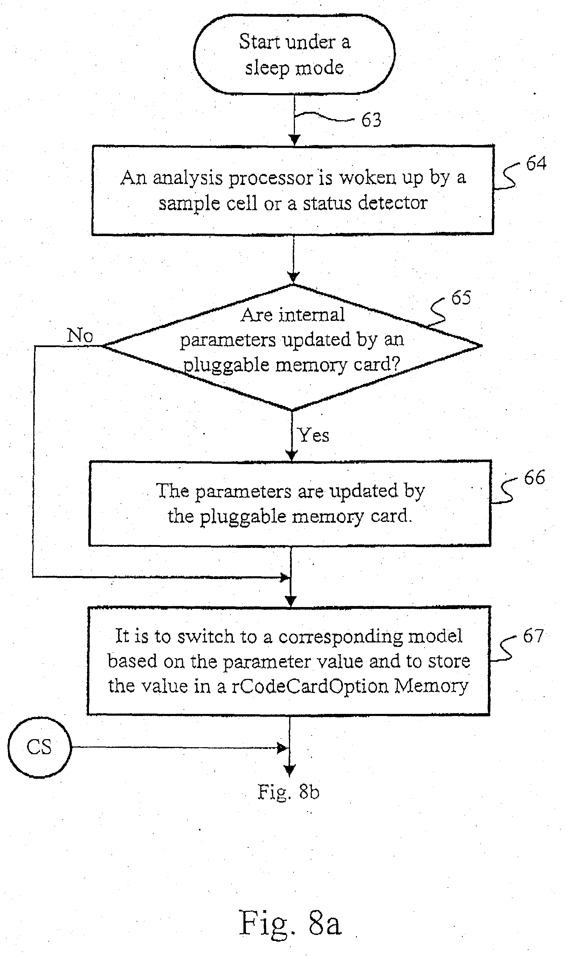

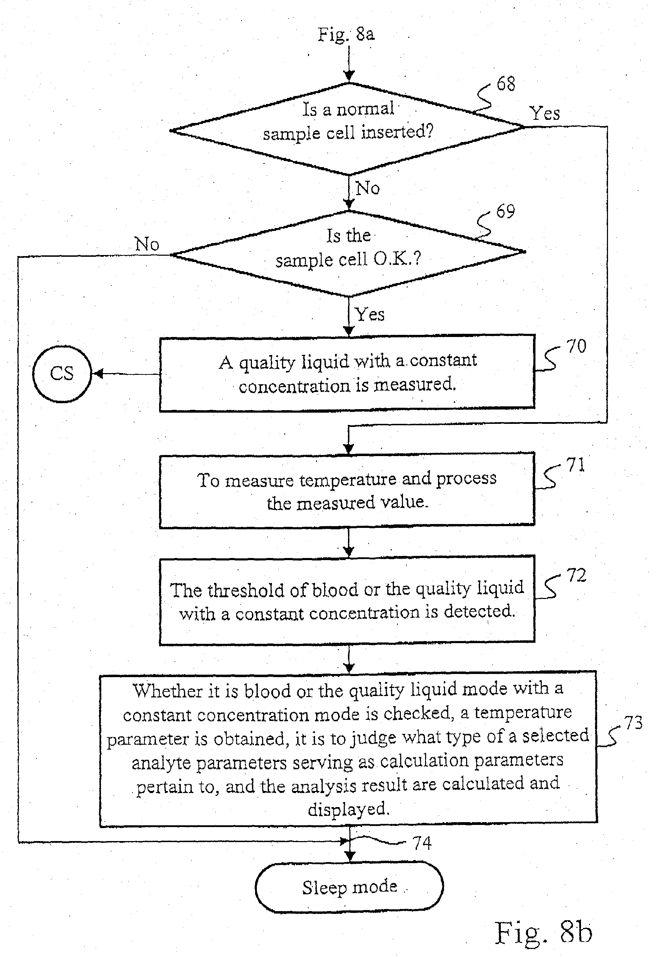

Figs. 8a and 8b show a flow chart of executing part of a program in the multi-functional signal analysis processor 1. After initialization and power check of the multi-functional signal analysis processor 1 and the polarized potential check provided by the reference potential unit 23, the detection of the concentration of a selected analyte, the measurement of the constant concentration of a quality liquid or the display of the internal reading memory is completed, or the signal analysis processor 1 is found to be abnormal, the signal analysis processor 1 enters a sleep mode, and the power managing device 22 powers down the devices of Fig. 5. In step 64, the signal analysis processor is woken up by the sample cell or the status detector. Next, in step 65, whether or not the pluggable memory card 6 is inserted into a slot 2 is determined. If so, the content of the pluggable information memory 14 mounted in the pluggable memory card 6 is read and stored into the electrically erasable programmable read/write memory 21 of the signal analysis processor 1 in step 66. If not, the content of the pluggable information memory 14 isn't read and stored into the electrically erasable programmable read/write memory 21 of the signal analysis processor 1. In step 67, the signal analysis processor 1 detects what type of the selected analyte it is to switch to based on the "model selecting parameter value" of the electrically erasable programmable read/write memory 21. The switching operation is to change the switch 37 of Fig. 6 into an "on" or "off" state. The model selecting parameter value of the electrically erasable programmable read/write memory 21 is stored into a rCOdeCardOption memory.

After that, the resistance reading is obtained through the sample cell or the status detector inserted into the slot 3. Based on the resistance, which one of a status detector, a normal sample cell 7 and a poor sample cell is inserted into the slot 3 is detected. If an abnormal sample cell is detected, and the abnormal sample cell is determined to be a poor sample cell based on the value of the resistance in step 69, then the process goes back to a sleep mode. If the status detector is inserted, it proceeds with step 70. In step 70, the signal analysis processor 1 selects a quality liquid mode with a constant concentration, and then the process goes to step 68.

If a normal sample cell is detected in step 68, the process goes to step 71. In step 71, the environmental temperature sensor 27 senses the environmental temperature and generates a calculation value to determine whether or not the environmental temperature is located within a test scope. If the environmental temperature is normal, in step 72, an output potential measured value is obtained when the quality liquid having a constant concentration or a selected analyte is placed on the detected zone 8 of the sample cell 7. If the measured value is greater than the threshold of the electrically erasable programmable read/write memory 21, the microprocessor 20 controls the reference potential unit 23 via the bus 32 so that the reference potential unit 23 can determine whether to supply the potential of the sample cell. The test time is determined by a test time parameter stored in the electrically erasable programmable read/write memory 21. When the detection is finished, the microprocessor 20 obtains a reaction measured value of the sample cell. Proceeding with step 73, corresponding calculation parameters are obtained, and the reading of the concentration of the selected analyte is obtained through calculation. After comparing the reading with the upper and lower limits stored in the electrically erasable programmable read/write memory 21, the reading or sign is displayed by the display device 30. Next, the process returns to a sleep mode.

Embodiment 1

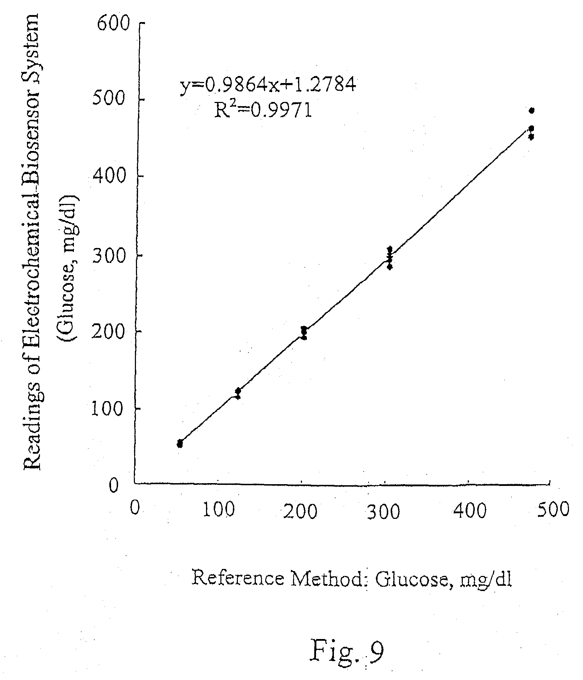

A whole-blood blood sugar concentration analysis is processed by using a blood sugar sample cell (see ROC Patent No. 124332I) together with the portable multi-functional electrochemical biosensor system of the present invention. Furthermore, YSI 2300 (electrochemical detecting method) is taken as a reference comparison method to ensure a best detection (shown in Fig. 9).

Embodiment 2

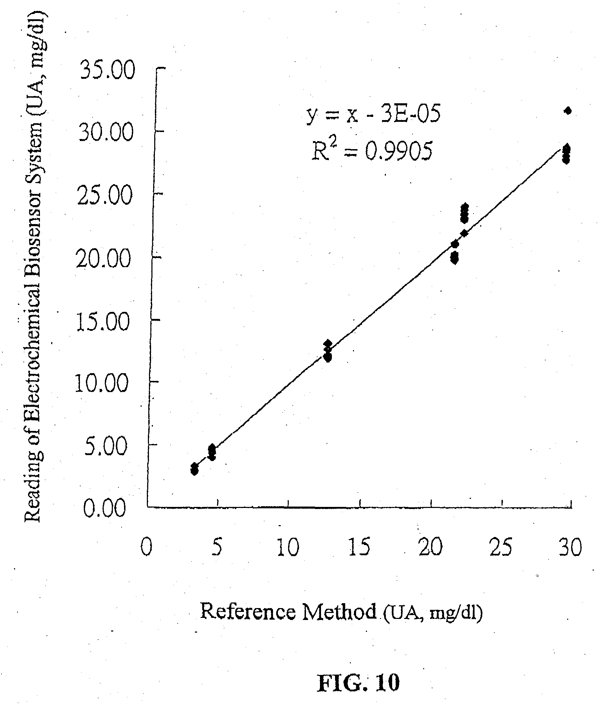

A whole-blood uric acid concentration analysis is processed by using a uric acid sample cell (see ROC Patent No. 107073I) together with the portable multi-functional electrochemical biosensor system of the present invention. Furthermore, EPAC 6140 biochemical analyzer and a set of Roche Uric Acid Plus tests (enzyme optical detecting method) are taken as a reference comparison method to ensure a best detection (shown in Fig. 10).

Embodiment 3

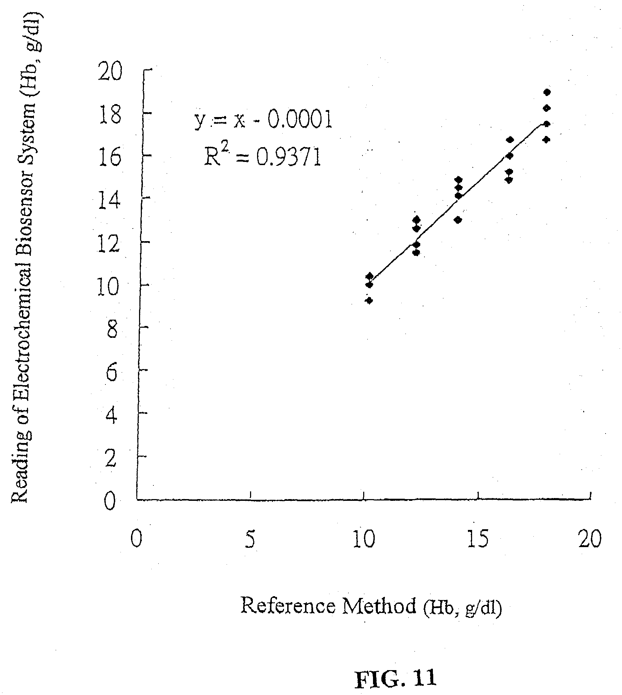

A whole-blood hemoglobin concentration analysis is processed by using a hemoglobin sample cell (see ROC Patent Publication No. 466344) together with the portable multi-functional electrochemical biosensor system of the present invention. Furthermore, Metertek SP-870 spectroscopic analyzer and a set of SIGMA Hemoglobin tests (high ferricyanide hemoglobin optical detecting method) are taken as a reference comparison method to ensure a best detection (shown in Fig. 11).

Embodiment 4

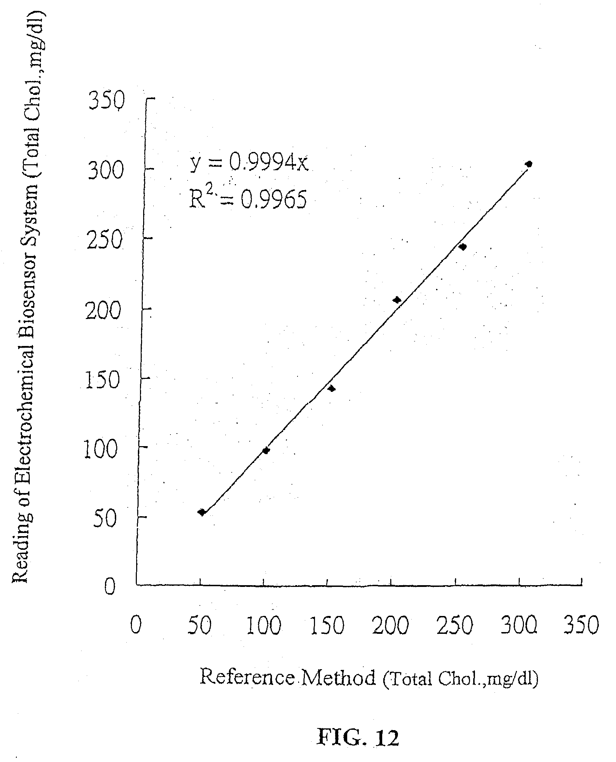

A total cholesterol standard solution concentration analysis is processed by using a total cholesterol sample cell made of cholesterol oxidase, cholesterol esterase, surfactants and electron mediator together with the portable multi-functional electrochemical biosensor system of the present invention. Furthermore, Metertek SP-870 spectroscopic analyzer and a set of Self-Prepared Total Cholesterol tests (enzyme optical detecting method) are taken as a reference comparison method to ensure a best detection (shown in Fig. 12).

Embodiment 5

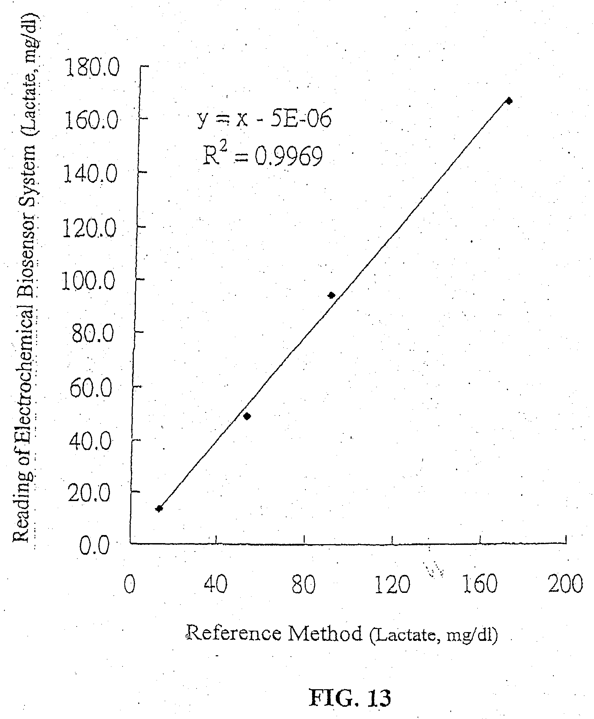

A lactic acid concentration analysis for blood serum is processed by using a lactic sample cell formed of lactate oxidase and electron mediator together with the portable multi-functional electrochemical biosensor system of the present invention. Furthermore, EPAC 6140 biochemical analyzer and a set of SIGMA lactate tests (enzyme optical detecting method) are taken as a reference comparison method to ensure a best detection (shown in Fig. 13).

The technical function and features of the present invention become more fully understandable from the above stated embodiments. It's to be noted that various changes and modifications are apparent to those skilled in the art. Such changes and modifications are to be understood as included within the scoop of the present invention as defined by the appended claims unless they depart therefrom.

**Claims**

1.    A portable multi-functional electrochemical biosensor system, comprising:

a plurality of sample cells, each sample cell having a reaction zone on which a substance is placed to react with a corresponding selected analyte and having at least two independent electrodes which are not connected to each other, wherein one of the two electrodes is a reference electrode, and the other is an working electrode, when a detective reaction occurs, the electrodes output an electrochemical reaction signal;

a plurality of pluggable information memories, corresponding to the sample cells, respectively, during detection, each corresponding pluggable information memory being able to provide parameters used for analyzing the concentration of the corresponding selected analyte; and

a multi-functional signal analysis processor, having a microprocessor, an electrically erasable programmable read/write memory and an environmental temperature sensor, the multi-functional signal analysis processor having at least two input terminals which are connected to the sample cell and the pluggable information memory, respectively, and when an electrochemical reaction occurs, the microprocessor transferring the parameters from the pluggable information to the electrically erasable programmable read/write memory so that the concentration of the selected analyte is calculated by using the electrochemical reaction signal output from the sample cell and the parameters provided by the electrically erasable programmable read/write memory, with cooperation of temperature compensation established by the environmental temperature sensor, and then output;

wherein the biosensor system uses a set of sample cell and pluggable information memory to detect the concentration of a corresponding selected analyte, thereby detecting the concentration for various selected analytes.

2.    The biosensor system as claimed in claim 1 or 2, wherein the pluggable information memory is an electrically erasable programmable read-only memory (EEPROM).

3.    The biosensor system as claimed in claim 1 or 2, wherein the parameters stored in the pluggable information memory comprises a start threshold, the type of the selected analyte, detection steps, detection timing, a temperature compensation and a method for calculation, which are provided for the use of the multi-functional signal analysis processor to calculate the concentration of the selected analyte.

4. The biosensor system as claimed in claim 1, 2 or 3 wherein the pluggable information memory further stores a parameter check-sum code, and before the detection is performed by the multi-functional signal analysis processor, the multi-functional signal analysis processor transfers the parameters and the parameter check-sum code of the pluggable information memory to the electrically erasable programmable read/write memory to determine whether or not the parameters are consistent with the parameter check-sum code, thereby confirming the correction of the transferred parameters.

5. The biosensor system as claimed in claim 1, 2, 3 or 4 wherein the reference electrode of the sample cell is grounded, and the working electrode of the sample cell is provided with a reference potential and has a signal amplified via an amplifier and a feedback resistor, and during the detection, the electrochemical reaction signal output from the working electrode is sent to the multi-functional signal analysis processor for calculating the concentration of the selected analyte

6. The biosensor system as claimed in any one of the preceding claims, wherein the multi-functional signal analysis processor comprises an gain adjustable amplifier, the reverse input terminal of which is connected to the working electrode, and the processor reasonably amplifies the signal of the working electrode via the gain adjustable amplifier to increase resolutions by the use of the parameters of the pluggable information memory, cooperating with the corresponding selected analyte.

7. The biosensor system as claimed in any one of the preceding claims, wherein the microprocessor of the multi-functional signal analysis processor applies a constant potential to the working electrode, after the selected analyte is reacted with a reactant, the microprocessor stops applying the constant potential, after a detection waiting time designated by the information memory, the microprocessor further applies a constant potential to the working electrode to establish an electrochemical reaction condition, at this time, the working electrode outputs the electrochemical reaction signal, after a power supply reaction time designated by the information memory passes by, the amplitude of the signal is detected, and the concentration of the selected analyte is calculated by the parameter for calculation designed by the information memory and then output.

8. A portable multi-functional electrochemical biosensor system, comprising:

a plurality of sample cells, each sample cell having a reaction zone on which a substance is placed to react with a corresponding selected analyte and having at least two independent electrodes which are not connected to each other, wherein one of the two electrodes is a reference electrode, and the other is an working electrode, and when a detective reaction occurs, the electrodes output an electrochemical reaction signal;

a plurality of pluggable information memories, corresponding to the sample cells, respectively, during detection, each corresponding pluggable information memory being able to provide parameters used for analyzing the concentration of the corresponding selected analyte; and

a multi-functional signal analysis processor, having a microprocessor, an electrically erasable programmable read/write memory and an environmental temperature sensor, the multi-functional signal analysis processor having at least two input terminals which are connected to the sample cell and the pluggable information memory, respectively, and when an electrochemical reaction occurs, the microprocessor transferring the parameters from the pluggable information memory to the electrically erasable programmable read/write memory so that the concentration of the selected analyte is calculated by using the electrochemical reaction signal output from the sample cell and the parameters provided by the electrically erasable programmable read/write memory, with cooperation of temperature compensation established by the environmental temperature sensor, and then output;

a status detector, having two independent electrodes which are connected to a resistor with a constant resistance, and to the sample cell of the multi-functional signal analysis processor, and whether the status of the multi-functional signal analysis processor is normal is based on whether the resistance of the resistor detected by the multi-functional signal analysis processor conforms to the built-in resistance of the processor;

Wherein the biosensor system uses a set of sample cell and pluggable information memory to detect the concentration of a corresponding selected analyte, thereby detecting the concentrations for various selected analytes.

Fig. 1

Fig. 2

Fig. 3

Fig. 4

Fig. 5

Fig. 6

Fig. 7

Start under a
sleep mode

63

An analysis processor is woken up by a
sample cell or a status detector

64

Are internal
parameters updated by an
pluggable memory card?

65

No

Yes

The parameters are updated by
the pluggable memory card.

66

It is to switch to a corresponding model
based on the parameter value and to store
the value in a rCodeCardOption Memory

67

CS

Fig. 8b

Fig. 8a

16

Fig. 8a

↓

68

Is a normal
sample cell inserted?          Yes

No

69

No          Is the
sample cell O.K.?

Yes

CS ←          A quality liquid with a constant
concentration is measured.          70

To measure temperature and process
the measured value.          71

The threshold of blood or the quality liquid
with a constant concentration is detected.          72

Whether it is blood or the quality liquid mode with a
constant concentration mode is checked, a temperature
parameter is obtained, it is to judge what type of a selected
analyte parameters serving as calculation parameters
pertain to, and the analysis result are calculated and
displayed.          73

74

Sleep mode

Fig. 8b

Fig. 9

FIG. 10

FIG. 11

**FIG. 12**

FIG. 13